# FASCICULE DE BREVET EUROPEEN

(11) **EP 3 492 288 B1**
(45) Date de publication et mention de la délivrance du brevet: **24.08.2022**
(21) Numéro de dépôt: 18207822.0
(22) Date de dépôt: 22.11.2018
(51) Int. Cl.: B60C 23/04, B60C 29/06

(54) **APPAREILLAGE POUR TESTER UNE FUITE CALIBRÉE DE GAZ SUR UNE VALVE DE PNEUMATIQUE, BOUCHON POUR UN TEL APPAREILLAGE, ET PROCÉDÉ ASSOCIÉ DE CONTRÔLE DE DÉTECTION DE FUITE**
GERÄT ZUM TESTEN EINES KALIBRIERTEN GASLECKS AN EINEM REIFENVENTIL, VERSCHLUSSKAPPE FÜR EIN SOLCHES GERÄT UND ENTSPRECHENDES VERFAHREN ZUR KONTROLLE DER LECKERKENNUNG
APPARATUS FOR TESTING A CALIBRATED LEAK OF GAS ON A TYRE VALVE, CAP FOR SUCH AN APPARATUS, AND ASSOCIATED METHOD FOR INSPECTING LEAK DETECTION

(30) Priorité: 30.11.2017 FR 1761485
(43) Date de publication de la demande: 05.06.2019
(73) Titulaire: ATEQ, 78340 Les Clayes sous Bois (FR)
(72) Inventeur: ROUSSEAU, Bruno, 78340 LES-CLAYES-SOUS-BOIS (FR)
(74) Mandataire: Vidon Brevets & Stratégie

(56) Documents cités:
- EP-A1- 0 524 057
- EP-A1- 2 562 012
- US-A1- 2008 258 893
- US-A1- 2010 101 316

## Description

### 1. Domaine de l'invention

L'invention se rapporte à un dispositif de contrôle et de calibrage de capteurs de détection de fuite de gaz dans un pneumatique, typiquement mais non exclusivement un pneumatique gonflé au gaz pour véhicule de transport.

L'invention concerne plus particulièrement le fait qu'une fuite maîtrisée, servant à calibrer un capteur de pression du pneu, par exemple de type TPMS, est provoquée par la mise en place d'un bouchon de test venant se visser sur la valve du pneumatique, ledit bouchon disposant d'un élément limitant la fuite de gaz selon un débit déterminé.

Le bouchon calibré selon l'invention est conçu pour créer une fuite du gaz de gonflage du pneumatique et donc une baisse de pression dans le pneumatique. Cette baisse de pression est typiquement mesurée par un capteur TPMS et les valeurs de mesure sont transmises par radio à un outil TPMS. Le but est de mesurer que le capteur fonctionne et éventuellement que le système embarqué dans le véhicule détecte bien une fuite même faible du gaz d'un pneu.

L'invention concerne également un procédé de test et de calibrage, et un dispositif correspondant.

### 2. Etat de la technique

De nos jours, les véhicules disposent de nombreux équipements améliorant la sécurité des passagers. Un élément particulièrement sensible pour la sécurité est les pneus, qui doivent être en bon état afin d'adhérer à la route et permettent un bon contrôle de la trajectoire. La défaillance d'un pneu est généralement due à une fuite du gaz contenu à l'intérieur. Pour éviter l'accident, il est souhaitable de vérifier régulièrement l'état de chaque pneu du véhicule, tant au niveau de leurs usures que de leur pression.

Des équipements de surveillance de la pression des pneus (appelé « TPMS », acronyme de l'expression Anglo-saxonne « Tyre Pressure Management System » ) sont obligatoires dans certains pays, comme les U.S.A.. Lorsque la pression du pneu diminue anormalement et que le pneu se déforme, ce qui peut provoquer une explosion, un témoin d'alarme sonore et/ou lumineux apparaît sur le tableau de bord du véhicule pour avertir le conducteur. Une façon de détecter une fuite dans un pneu consiste à l'équiper d'un capteur directement installé dans la roue, de préférence au niveau de la tige de soupape du pneu. Ces capteurs mesurent divers paramètres tels que : la pression du gaz, la température des pneus, la vitesse de rotation des roues. Les capteurs euxmêmes comprennent un code d'identification de capteur spécifique (ID) et sont capables de recevoir des signaux électroniques et d'envoyer des signaux électroniques sans fil vers une unité de contrôle embarquée. Si un capteur de roue transmet une pression des pneus ou une autre condition dans un pneu qui est au-dessus ou au-dessous d'un niveau prédéterminé, l'ECU émet des signaux d'alerte vers le tableau de bord à l'intérieur de l'habitacle pour avertir le conducteur.

Sur les chaines de fabrication de véhicule et les garages automobile, les opérateurs montent les capteurs TPMS et sont ensuite chargés de tester leurs fonctionnements. Un test consiste notamment à provoquer une fuite dans le pneu et à analyser les signaux émis par le capteur correspondant. L'analyse des signaux s'effectue par un outil approprié appelé par la suite « outil TPMS ».

Il est connu de réaliser volontairement un orifice dans le caoutchouc d'un pneumatique avec une perceuse et un foret ayant un diamètre déterminé. Cet orifice provoque une fuite de gaz contenue dans le pneumatique. La pression du gaz est constamment mesurée par les capteurs TPMS et transmise à l'outil TPMS qui analyse l'évolution de la pression et affiche une information représentative de la diminution de la pression. Cette méthode ne permet pas de garantir un diamètre calibré de l'orifice, de ce fait le débit d'air de la fuite n'est pas suffisamment maîtrisé et ne peut donc pas être quantifié. Le percement à travers une jante est envisageable mais complexe à cause de l'épaisseur de la jante, et l'obturation de l'orifice est complexe et prend du temps.

Le demandeur offre en vente des dispositifs pour mesurer des fuites de gaz calibrées. Ces dispositifs consistent à introduire une certaine quantité de gaz traceur dans un pneumatique et, une fois qu'un orifice est réalisé, à en détecter la présence autour du pneumatique. Ces dispositifs disposent d'un écran, d'un clavier et d'une sonde que l'opérateur déplace à la surface du pneumatique, la sonde « renifle » véritablement l'air ambiant et détecte la présence du gaz traceur, le dispositif affiche alors sur son écran la quantité de gaz qui est détecté. Les indications fournies par le capteur TPMS qui caractérisent la fuite de gaz vue de l'intérieur du pneu, sont comparées avec les informations fournies par ce dispositif sur la fuite détectée à l'extérieur du pneu. Lorsque les indications sont quasi identiques, le capteur TPMS fonctionne parfaitement.

Dans ce processus, il y a une nécessité de maîtriser le débit de gaz qui s'échappe du pneu, ce qui implique de calibrer le dispositif provoquant la fuite. De plus, ce dispositif provoquant la fuite doit être retiré après la mesure en laissant le pneumatique en ordre de marche, il convient donc de proposer un dispositif qui peut se retirer facilement et qui permet de laisser facilement opérationnel le pneumatique.

Dans un autre domaine que celui du test de capteurs détectant des fuites d'un pneumatique, il est connu de réaliser des fuites dites « rubis ». Le dispositif possède un cylindre dont l'orifice intérieur correspond à un débit calibré très faible. La difficulté réside dans la maîtrise du très faible débit permis par l'orifice. Plus l'orifice est petit, plus il est difficile à réaliser : le laser produit généralement une section en forme de patate qui ne convient pas à des diamètres d'orifice étroits. Pour produire des débits faibles, il est prévu d'utiliser une membrane frittée constituée d'un élément poreux laissant s'échapper du gaz sous pression. En comprimant l'élément poreux lors du façonnage de la membrane, la résistance au passage du gaz est augmentée et le débit est ainsi réduit jusqu'à la valeur désirée.

La présente invention décrit une amélioration consistant à disposer d'un dispositif simulant une fuite qui produit un débit de gaz calibré et qui peut facilement se retirer en laissant le pneumatique dans un état opérationnel.

Le document EP 2 562 012 - TOKAI décrit un système de repérage de capteurs TPMS mesurant la pression et la température de pneus d'un véhicule. Pour identifier le bon capteur, un opérateur intervient sur la valve d'un pneu pour faire baisser sa pression, le capteur TPMS qui émet des données signifiant une baisse de pression est alors identifié comme le capteur associé au pneu soumis à l'intervention de l'opérateur.

Le document D2 - US 2010/101316 - LIN HUNG-YI décrit un capuchon de valve de pneu destiné à détecter une fuite de gaz hors du pneu lorsque la valve se dégrade et ne permet plus de maintenir le gaz sous une pression constante dans le pneu. Ce capuchon comporte un corps se vissant sur la valve, une rondelle d'étanchéité, un moyen d'émission de lumière d'alerte et un couvercle laissant passer la lumière. La lumière d'alerte s'allume lorsqu'une fuite est détectée et que la pression diminue.

Le document D3 - US 2008/258893 - HUANG SHIAO décrit un capteur de pression se fixant sur un pneu et un moyen permettant d'assurer une meilleure fixation du capteur.

### 3. Exposé de l'invention

L'invention a pour but de pallier les inconvénients exposés ci-dessus, ainsi que d'autres qui apparaîtront dans la suite de ce document.

À cet effet, l'invention a pour objet un appareillage pour tester une fuite calibrée de gaz hors d'un pneumatique du type comprenant d'une part un moyen pour provoquer une fuite de gaz hors dudit pneumatique, et d'autre part un moyen de détection de ladite fuite de gaz. Ledit moyen pour provoquer une fuite de gaz est constitué d'un bouchon à fuite calibrée destiné à se fixer sur la valve dudit pneumatique, et ledit bouchon à fuite calibrée comporte un moyen de pression sur la soupape de la valve et un orifice de section calibrée. De cette manière, il est facile à un opérateur de placer un bouchon de test sur la valve du pneumatique gonflé et de contrôler à l'aide d'un moyen de détection de fuite de gaz les conditions dans lesquelles se produit la diminution de la pression correspondant à la fuite ainsi provoquée.

Ce montage peut servir à de nombreux types d'utilisation, notamment le test de capteurs de pression, par exemple de type TPMS, comme il sera discuté ci-après.

Selon un autre mode de réalisation, ledit moyen de détection de ladite fuite de gaz comporte un dispositif de détection et/ou de mesure de l'évolution de la pression du gaz dans le pneumatique s'échappant à travers l'orifice.

Selon un autre mode de réalisation, déjà évoqué, ledit moyen de détection de ladite fuite de gaz utilise un capteur dit « TPMS » monté dans ledit pneumatique, ledit capteur « TPMS » communiquant par radio avec le dispositif de détection et de mesure.

Avantageusement, le dispositif de détection et de mesure comporte des moyens de stockage et de restitution des résultats de test, lesdits moyens étant ajustables en fonction du calibrage du bouchon à fuite calibrée utilisé.

Selon un autre mode de réalisation, l'appareillage comprend un jeu de plusieurs bouchons à fuite calibrée, le dispositif de détection et de mesure comprenant également des moyens sélectionnables de détection et de mesure adaptés à chacun desdits bouchons.

Selon un autre mode de réalisation, l'appareillage comprend également des moyens de test périodique du bouchon à fuite calibré et de détermination et prise en compte des variations des valeurs de fuite dans le temps.

Selon un autre mode de réalisation, le bouchon est un élément consommable destiné à être jeté après un certain nombre d'utilisations. Ce cas de figure correspond particulièrement au cas des bouchons à membrane frittée, qui subissent une usure rapide.

Selon un autre aspect, l'invention couvre aussi le bouchon lui-même, pris isolément, tel que destiné à se fixer sur une valve de pneumatique gonflé d'un gaz, ce bouchon comportant comme déjà mentionné un moyen de pression sur la soupape de la valve et un orifice de section calibrée laissant s'échapper un débit de gaz prédéterminé.

Avantageusement, le bouchon est naturellement destiné notamment à fonctionner avec un appareillage tel que décrit ci-dessus.

Avantageusement, le bouchon comporte un corps cylindrique comportant ledit moyen de pression et un support également cylindrique ouvert à une extrémité dans laquelle s'insère librement ledit corps par coulissement, le fond et les côtés du support formant avec la face du corps orienté vers le fond une chambre de forme cylindrique, et le support se visse sur la valve du pneu jusqu'à une position où le moyen de pression du corps exerce une pression sur la soupape pour l'ouvrir.

Préférentiellement, l'étanchéité entre le corps et le support est réalisée par un joint torique.

Selon un premier mode de réalisation, ledit orifice est un orifice percé formé de façon à permettre essentiellement un écoulement laminaire calibré.

Selon un deuxième mode de réalisation, l'orifice est calibré par insertion d'une membrane frittée.

Selon un mode de réalisation optionnel avantageux, le bouchon comporte un opercule amovible destinée à être ôté avant l'installation du bouchon sur le pneumatique. Cet opercule vise à protéger l'intégrité de l'orifice calibré pendant la période de stockage du bouchon avant utilisation.

L'invention vise enfin également un procédé d'utilisation de l'appareillage de mesure décrit précédemment pour calibrer un débit de gaz prédéterminé s'échappant d'un pneumatique, en utilisant un bouchon tel que décrit précédemment.

Avantageusement, le procédé est utilisé pour tester le caractère opérationnel d'un capteur TPMS et/ou d'un dispositif de détection et de mesure utilisant des signaux émis par un capteur TPMS.

Selon une des caractéristiques de l'invention, dans le cadre de mise en œuvre du procédé de l'invention, chaque bouchon est conçu pour offrir un taux de fuite prédéterminé à une certaine pression en fonction du test de pneumatique à réaliser.

### 4. Liste des figures

D'autres caractéristiques et avantages de l'invention ressortiront de la description ci-après, fournie à titre d'exemple non limitatif, et faite en référence aux dessins annexés, dans lesquels :
- la figure 1 illustre un appareillage de test d'un pneumatique doté d'une valve comportant un bouchon selon un exemple de réalisation de l'invention ;
- la figure 2 présente une vue du dessus de la tête d'un bouchon de test selon un exemple de réalisation ;
- la figure 3 présente une vue en coupe au milieu de la tête du bouchon de test selon cet exemple de réalisation ;
- la figure 4 présente une vue de côté de la tête du bouchon de test selon ce même exemple de réalisation ;
- la figure 5 présente une vue du dessus d'un support du bouchon de test selon un exemple de réalisation ;
- la figure 6 présente une vue en coupe au milieu du support de test selon cet exemple de réalisation ;

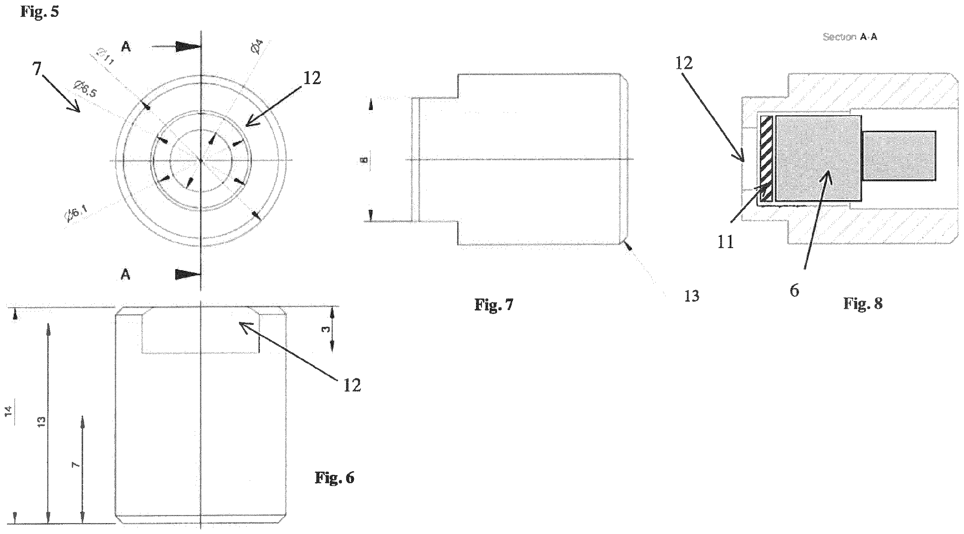

- la figure 6 présente une vue de gauche du support de test selon ce même exemple de réalisation ;
- la figure 7 présente une vue en coupe au milieu du support de test selon ce même exemple de réalisation.

### 5. Description détaillée de l'invention

Les éléments identiques sur les différentes figures, portent les mêmes références.

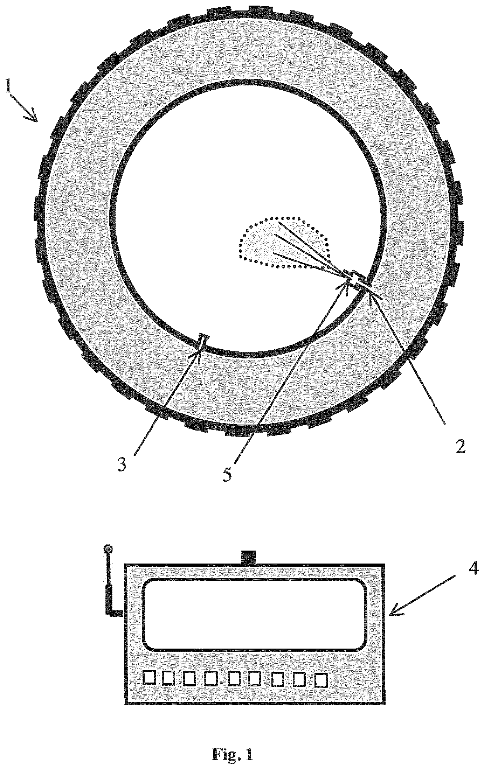

La **Fig. 1** représente un appareillage pour tester une fuite calibrée de gaz hors d'un pneumatique 1 doté d'une valve 2 pour le gonflage et destiné à équiper un véhicule (non représenté sur la figure). Ce véhicule peut être une voiture de tourisme, un fourgon, un camion, un tracteur, une remorque, et de façon plus générale, tout véhicule se déplaçant sur des roues avec des pneus gonflés d'un gaz. Cette valve possède un corps cylindrique se prolongeant à l'extérieur du pneumatique, le corps étant fileté sur la surface extérieure pour le vissage d'un bouchon de protection de la soupape. Le pneumatique dispose également d'un capteur TPMS 3 comportant typiquement tout ou partie des éléments suivants, à savoir un module électronique comprenant une pile électrique, une carte de circuit imprimé avec des antennes ou des bobines de communication (pour la réception et la transmission), un capteur de pression d'air, un capteur de température, un dispositif de détection de rotation ou un accéléromètre, un contrôleur programmable et une mémoire pour mémoriser des données telles que l'identifiant ID du capteur ID. De tels capteurs sont conçus pour transmettre régulièrement leurs informations vers une unité de contrôle « ECU » (non représentée sur la figure) qui est embarquée dans le véhicule. L'unité de contrôle embarquée dans le véhicule analyse les informations transmises et le cas échéant, détecte la présence d'une fuite sur un pneumatique et en informe immédiatement le conducteur.

L'appareillage pour tester une fuite calibrée de gaz hors d'un pneumatique comporte un outil dit « outil TPMS » que les opérateurs présents sur une chaîne de fabrication utilisent pour recevoir et traiter des données provenant de capteurs TPMS actifs. Cet outil 4 visible sur la **Fig. 1** est un appareil portable comportant typiquement une batterie, un processeur, une mémoire, une interface utilisateur pour l'affichage d'informations et pour l'entrée de commandes, et un moyen de communication radio. Ce moyen de communication permet notamment la communication avec des capteurs TPMS 3 et éventuellement la communication longue distance avec un serveur via un réseau.

Au moment du test des capteurs TPMS, l'opérateur retire le bouchon de protection du pneumatique et le remplace par un bouchon de test 5 qui se visse sur la valve. En vissant le bouchon de test, celui-ci appuie sur la soupape de la valve 2 et déclenche son ouverture. Le gaz contenu dans le pneumatique s'échappe à travers le bouchon de test dans un conduit dont le diamètre est parfaitement calibré. Ce faisant, le bouchon de test simule une fuite de gaz dont le débit est calibré. Les indications fournies par le capteur TPMS qui caractérise la fuite de gaz vue de l'intérieur du pneu sont comparées avec les informations fournies par ce dispositif sur la fuite détectée à l'extérieur du pneu. Si les indications sont quasi identiques, le capteur TPMS fonctionne parfaitement.

D'autres modalités et protocoles de test peuvent être mis en œuvre en fonction des données détectées, mesurées et/ou stockées à partir du capteur.

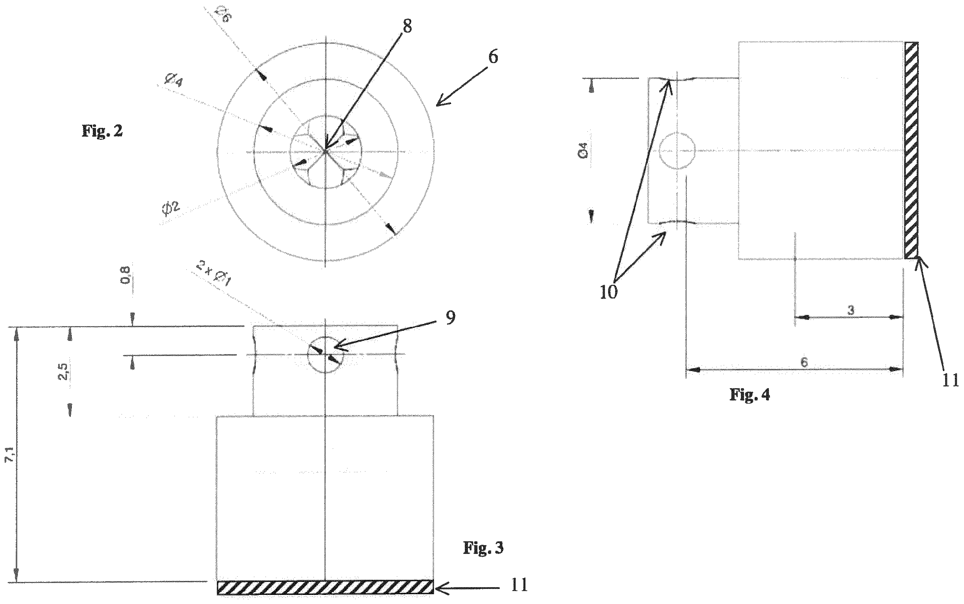

Un exemple de réalisation d'un bouchon de test 5 est maintenant décrit en relation avec les figures 2 et suivantes.

Selon cet exemple de réalisation, un bouchon de test 5 comporte une tête 6 et un support de test 7.

La **Fig. 2** présente une vue du dessus de la tête 6 d'un bouchon de test selon cet exemple de réalisation. Les valeurs de diamètres mentionnées sur la figure sont exprimées en millimètres et ne sont données qu'à titre d'exemple. Cette pièce est de forme cylindrique avec un orifice 8 sur le dessus.

La **Fig. 3** présente une vue en coupe au milieu de la tête 6 du bouchon de test de la figure précédente. La tête présente deux parties de diamètre différent, séparées par un épaulement. La surface (visible sur la **Fig. 2**) à l'extrémité de la partie de plus faible diamètre est destinée à venir en contact avec la soupape de la valve pour exercer une pression sur elle et ainsi libérer le gaz à l'intérieur du pneu. Le gaz en s'échappant passe à travers les orifices 9 dont un seul est visible sur la figure.

La **Fig. 4** présente une vue de côté de la tête 6 du bouchon de test représenté de côté sur la précédente figure. On peut voir la présence d'un rétrécissement 10 pratiqué tout autour de la partie de plus faible diamètre, ce rétrécissement étant destiné à recevoir un joint torique (non représenté sur la figure) qui assure l'étanchéité entre la tête 6 et le support de test 7. Le gaz provenant du pneu passe à l'intérieur de la tête et traverse un élément 11 limitant le débit du gaz s'échappant du pneumatique. Cet élément 11 est par exemple collé sur l'extrémité de la tête qui vient s'insérer au fond du support 7.

La **Fig. 5** présente une vue du dessus du support 7 destiné à coopérer avec la tête 6 représentée sur les **Fig. 2, 3** et **4****.** Les valeurs de diamètres présentes sur la **Fig. 5** sont exprimées en millimètres et ne sont données qu'à titre d'exemple. Cette pièce est également de forme cylindrique avec un orifice 12 sur le dessus pour le passage du gaz qui peut ainsi s'évacuer du bouchon de test. Cette pièce est destinée à contenir la tête 6 et à se visser sur la valve 2.

La **Fig. 6** présente une vue en coupe réalisée au milieu du support de test, l'orifice 12 pour l'évacuation du gaz provenant de l'orifice 9 de la tête 6 étant clairement visible.

La **Fig. 7** présente une vue de gauche du support de test. On peut voir la présence d'un chanfrein 13 à la base du support du côté qui se visse sur la valve 2.

La Fig. 8 présente une vue en coupe au milieu du support de test selon ce même exemple de réalisation. La tête 6 représentée en gris sur la figure se place à l'intérieur du support, la partie de plus grand diamètre venant contre l'élément 11 limitant le débit. L'extrémité du support de test 7 opposée à l'ouverture 11 est taraudée pour se visser sur la valve 2. En se vissant, la partie de plus petit diamètre de la tête 6 vient presser la soupape de la valve afin de laisser s'échapper le gaz du pneumatique.

En fonction du débit que l'on souhaite provoquer, l'élément 11 limitant le débit est par exemple un élément fritté ou une pastille percée d'un trou, l'élément fritté présentant une épaisseur plus importante que la pastille.

Le procédé d'utilisation de l'appareillage pour tester une fuite calibrée de gaz hors d'un pneumatique 1, en utilisant un bouchon 5 se vissant sur la valve de ce pneumatique pour laisser s'échapper un certain débit de gaz, va maintenant être décrit.

Dans un premier temps, l'outil TPMS 4 entre en communication avec un capteur TPMS 3 installé sur un pneumatique 1. L'opérateur enlève le bouchon de ce pneumatique et place le bouchon de test 5. Selon un perfectionnement, le bouchon de test 5 comporte un opercule amovible destinée à être ôté avant l'installation du bouchon sur le pneumatique. De cette façon, la poussière ne pénètre pas dans le bouchon de test et l'élément limitant le débit reste propre.

Avantageusement, l'appareillage comprend un jeu de plusieurs bouchons 5 pour produire différents débits de fuite calibrée, par exemple : 0,1 cm3/mn, 1,1 cm3/mn et 0,5 cm3/mn. Ces valeurs sont typiques de fuites lentes dans un pneumatique. D'autres valeurs peuvent être prescrites par le constructeur pour une certaine pression dans le pneumatique.

Lors du vissage sur la valve, le bouchon appuie sur la soupape et le gaz s'échappe du pneu selon un débit déterminé par l'élément 11 limitant le débit. L'outil TPMS 4 reçoit régulièrement les mesures provenant du capteur TPMS 3 et calcule la vitesse de diminution de la pression. L'outil TPMS affiche alors une valeur représentative de la diminution de la pression mesurée au cours d'un laps de temps déterminée. De cette façon, l'opérateur vérifie que le capteur 3 fonctionne correctement. Une fois le test effectué, le bouchon de test 5 est retiré et remplacé par le bouchon de protection. Lorsque le bouchon de test comporte une élément limiteur de débit sensible à l'usure, il a vocation soit à être régulièrement contrôlé pour être recalibré, soit à être tout simplement jeté après un certain nombre d'utilisations.

Avantageusement, l'outil TPMS 4 comprend des moyens ajustables de détection et de mesure adaptés à chacun desdits bouchons. De cette façon, l'outil TPMS peut vérifier que la baisse de pression mesurée par le capteur TPMS correspond bien au débit de la fuite de gaz provoquée par l'installation du bouchon 5 sur le pneumatique 1. L'outil TPMS possède une mémoire pour le stockage et la restitution des résultats de test sur des pneumatiques. L'outil TPMS mémorise les conditions du test, et notamment le calibrage du bouchon 5 utilisé, et dispose de moyens pour exporter ces résultats afin de les imprimer ou de les afficher sur un écran.

Avantageusement, l'outil TPMS émet un signal sonore et/ou lumineux lorsque la pression mesurée baisse et descend en-dessous d'un seuil déterminée. De cette façon, l'opérateur peut être averti que le capteur a bien émis des valeurs de pression qui vont diminuant et que le test peut être considéré comme concluant.

Avantageusement, l'outil TPMS 4 est un instrument dédié à l'étalonnage et traçable aux normes internationales. Il permet la vérification de l'étalonnage des instruments de mesure de fuite et de débit ainsi que des fuites et des jets calibrés. Il est de préférence léger, compact et convivial pour les contrôles sur le terrain ou dans une chaîne de fabrication.

Selon un autre perfectionnement, le dispositif d'analyse comporte un moyen d'introduction d'une information représentative du volume du pneumatique 1. En connaissant le volume et en prenant en compte la diminution de pression provoquée par la mise en place du bouchon de test, le dispositif affichant le débit de gaz de la fuite en fonction de l'évolution de la baisse de pression et du volume du pneumatique. L'opérateur peut alors corréler cette valeur avec le débit de gaz que doit générer ce bouchon de test et ainsi vérifier que les deux valeurs sont identiques.

Bien que la présente invention ait été décrite en référence aux modes de réalisation particuliers illustrés, celle-ci n'est nullement limitée par ces modes de réalisation, mais ne l'est que par les revendications annexées. En particulier, la présente invention peut être utilisée par tout type de véhicule doté de roues gonflées par un gaz. On notera que des changements ou des modifications pourront être apportés par l'Homme du métier.

## Revendications

1. Bouchon (5) destiné à se fixer sur une valve (2) de pneumatique (1) gonflé d'un gaz et destiné à fonctionner avec un appareillage pour tester une fuite calibrée de gaz hors dudit pneumatique (1) , **caractérisé en ce qu'**il comporte un moyen de pression (6) sur la soupape de la valve et un orifice de section calibrée laissant s'échapper un débit de gaz prédéterminé, ledit orifice étant calibré par insertion d'une membrane frittée (11).

2. Bouchon selon la revendication 1, **caractérisé en ce qu'**il comporte un corps cylindrique comportant ledit moyen de pression et un support également cylindrique ouvert à une extrémité dans laquelle s'insère librement ledit corps par coulissement, le fond et les côtés du support formant avec la face du corps orienté vers le fond une chambre de forme cylindrique, et **en ce que** le support se visse sur la valve du pneu jusqu'à une position où le moyen de pression du corps exerce une pression sur la soupape pour l'ouvrir.

3. Bouchon selon la revendication 2, **caractérisé en ce que** l'étanchéité entre le corps et le support est réalisée par un joint torique.

4. Bouchon selon l'une quelconque des revendications 1 à 3, **caractérisé en ce que** ledit orifice est un orifice percé formé de façon à permettre essentiellement un écoulement laminaire calibré.

5. Bouchon selon l'une quelconque des revendications 1 à 4, **caractérisé en ce qu'**il comporte un opercule amovible destinée à être ôté avant l'installation du bouchon sur le pneumatique.

6. Appareillage pour tester une fuite calibrée de gaz hors d'un pneumatique (1) du type comprenant d'une part un moyen pour provoquer une fuite de gaz hors dudit pneumatique, et d'autre part un moyen de détection de ladite fuite de gaz, **caractérisé en ce que** ledit moyen pour provoquer une fuite de gaz est constitué d'un bouchon (5) à fuite calibrée selon l'une des revendication 1 à 5.

7. Appareillage selon la revendication 6 **caractérisé en ce que** ledit moyen de détection de ladite fuite de gaz comporte un dispositif de détection et de mesure (4) de l'évolution de la pression du gaz dans le pneumatique s'échappant à travers l'orifice.

8. Appareillage selon la revendication 7 **caractérisé en ce que** ledit moyen de détection de ladite fuite de gaz comporte en outre un capteur (3) dit « TPMS » monté dans ledit pneumatique.

9. Appareillage selon la revendication 8 **caractérisé en ce que** ledit capteur (3) « TPMS » communique par radio avec le dispositif de détection et de mesure (4).

10. Appareillage selon l'une quelconque des revendications 7 à 9, **caractérisé en ce que** le dispositif de détection et de mesure (4) comporte des moyens de stockage et de restitution des résultats de test, lesdits moyens étant ajustables en fonction du calibrage du bouchon à fuite calibrée utilisé.

11. Appareillage selon l'une quelconque des revendications 7 à 10, **caractérisé en ce qu'**il comprend un jeu de plusieurs bouchons (5) à fuite calibrée, et **en ce que** dispositif de détection et de mesure (4) comprend des moyens sélectionnables de détection et de mesure adaptés à chacun desdits bouchons.

12. Appareillage selon l'une quelconque des revendications 7 à 11, **caractérisé en ce qu'**il comprend également des moyens de test périodique du bouchon à fuite calibré et de détermination et prise en compte des variations des valeurs de fuite dans le temps.

13. Appareillage selon l'une quelconque des revendications 7 à 12, **caractérisé en ce que** le bouchon est un élément consommable destiné à être jeté après un certain nombre d'utilisations.

14. Procédé d'utilisation de l'appareillage de mesure selon l'une quelconque des revendications 6 à 13 pour calibrer un débit de gaz prédéterminé s'échappant d'un pneumatique, **caractérisé en ce qu'**il utilise un bouchon (5) selon l'une quelconque des revendications 1 à 5.

15. Procédé selon la revendication 14 **caractérisé en ce qu'**il est utilisé pour tester le caractère opérationnel d'un capteur TPMS et/ou d'un dispositif de détection et de mesure (4) utilisant des signaux émis par un capteur TPMS

16. Procédé d'utilisation selon l'une quelconque des revendications 14 ou 15, **caractérisé en ce qu'**il est prévu d'utiliser un jeu de plusieurs bouchons (5) à fuite calibrée, chaque bouchon (5) étant conçu pour offrir un taux de fuite prédéterminé à une certaine pression en fonction du test de pneumatique à réaliser.

## Patentansprüche

1. Stopfen (5), der dazu bestimmt ist, sich an einem Ventil (2) eines Reifens (1) zu befestigen, der mit einem Gas befüllt ist und dazu bestimmt ist, mit einer Apparatur zum Testen eines kalibrierten Gaslecks aus dem Reifen (1) zu funktionieren, **dadurch gekennzeichnet, dass** er ein Druckmittel (6) auf dem Ventileinsatz und eine Öffnung mit kalibriertem Querschnitt aufweist, die einen vorbestimmten Gasdurchfluss entweichen lässt, wobei die Öffnung durch Einsetzen einer gesinterten Membran (11) kalibriert wird.

2. Stopfen nach Anspruch 1, **dadurch gekennzeichnet, dass** er einen das Druckmittel aufweisenden zylindrischen Körper und einen ebenfalls zylindrischen Träger aufweist, der an einem Ende offen ist, in das sich der Körper frei gleitend einfügt, wobei der Boden und die Seiten des Trägers mit der Fläche des Körpers, der zum Boden hin gerichtet ist, eine zylinderförmige Kammer bilden, und dass der Träger sich auf das Reifenventil bis zu einer Position aufschraubt, in der das Druckmittel des Körpers einen Druck auf den Einsatz ausübt, um ihn zu öffnen.

3. Stopfen nach Anspruch 2, **dadurch gekennzeichnet, dass** die Abdichtung zwischen dem Körper und dem Träger durch einen O-Ring hergestellt wird.

4. Stopfen nach einem beliebigen der Ansprüche 1 bis 3, **dadurch gekennzeichnet, dass** die Öffnung ein gebohrtes Loch ist, das so ausgebildet ist, dass es im Wesentlichen eine kalibrierte laminare Strömung ermöglicht.

5. Stopfen nach einem beliebigen der Ansprüche 1 bis 4, **dadurch gekennzeichnet, dass** er eine abnehmbare Abdeckung aufweist, die dazu bestimmt ist, vor dem Anbringen des Stopfens auf dem Reifen entfernt zu werden.

6. Apparatur zum Testen eines kalibrierten Gaslecks aus einem Reifen (1), von der Art mit einerseits einem Mittel zum Verursachen eines Gaslecks aus dem Reifen und andererseits einem Mittel zum Erkennen des Gaslecks, **dadurch gekennzeichnet, dass** das Mittel zum Verursachen eines Gaslecks durch einen Stopfen (5) mit kalibriertem Leck nach einem der Ansprüche 1 bis 5 gebildet ist.

7. Apparatur nach Anspruch 6, **dadurch gekennzeichnet, dass** das Mittel zum Erkennen des Gaslecks eine Vorrichtung zum Erkennen und Messen (4) der Entwicklung des Drucks des Gases in dem Reifen aufweist, das durch die Öffnung entweicht.

8. Apparatur nach Anspruch 7, **dadurch gekennzeichnet, dass** das Mittel zum Erkennen des Gaslecks ferner einen sogenannten "TPMS"-Sensor (3) aufweist, der in dem Reifen montiert ist.

9. Apparatur nach Anspruch 8, **dadurch gekennzeichnet, dass** der "TPMS"-Sensor (3) per Funk mit der Erkennungs- und Messvorrichtung (4) kommuniziert.

10. Apparatur nach einem beliebigen der Ansprüche 7 bis 9, **dadurch gekennzeichnet, dass** die Erkennungs- und Messvorrichtung (4) Mittel zum Speichern und Wiedergeben der Testergebnisse aufweist, wobei die Mittel in Abhängigkeit von der Kalibrierung des verwendeten Stopfens mit kalibriertem Leck einstellbar sind.

11. Apparatur nach einem beliebigen der Ansprüche 7 bis 10, **dadurch gekennzeichnet, dass** sie einen Satz von mehreren Stopfen (5) mit kalibriertem Leck umfasst und dass die Erkennungs- und Messvorrichtung (4) auswählbare Erkennungs- und Messmittel umfasst, die an den jeweiligen Stopfen angepasst sind.

12. Apparatur nach einem beliebigen der Ansprüche 7 bis 11, **dadurch gekennzeichnet, dass** sie ferner Mittel umfasst, um den Stopfen mit kalibriertem Leck periodisch zu testen und die zeitlichen Veränderungen der Leckwerte festzustellen und zu berücksichtigen.

13. Apparatur nach einem beliebigen der Ansprüche 7 bis 12, **dadurch gekennzeichnet, dass** der Stopfen ein verbrauchbares Element ist, das dazu bestimmt ist, nach einer bestimmten Anzahl von Verwendungen entsorgt zu werden.

14. Verfahren zum Verwenden der Messapparatur nach einem beliebigen der Ansprüche 6 bis 13 für die Kalibrierung eines vorbestimmten Gasdurchflusses, der aus einem Reifen entweicht, **dadurch gekennzeichnet, dass** es einen Stopfen (5) nach einem beliebigen der Ansprüche 1 bis 5 verwendet.

15. Verfahren nach Anspruch 14, **dadurch gekennzeichnet, dass** es eingesetzt wird, um die Betriebsfähigkeit eines TPMS-Sensors und/oder einer Erkennungs- und Messvorrichtung (4) zu prüfen, die von einem TPMS-Sensor gesendete Signale verwendet.

16. Verwendungsverfahren nach einem beliebigen der Ansprüche 14 oder 15, **dadurch gekennzeichnet, dass** es vorgesehen ist, einen Satz von mehreren Stopfen (5) mit kalibriertem Leck zu verwenden, wobei der jeweilige Stopfen (5) ausgestaltet ist, um eine vorbestimmte Leckrate unter einem bestimmten Druck in Abhängigkeit von dem durchzuführenden Reifentest zu bieten.

## Claims

1. Plug (5) intended to be fastened onto a valve (2) of a tyre (1) inflated with a gas and intended to function with an equipment for testing a calibrated leak of gas out of said tyre (1), **characterised in that** is comprises a means (6) for pressure on the valve member of the valve and an orifice having a calibrated cross-section letting a predetermined flow rate of gas escape, said orifice is calibrated by insertion of a sintered membrane (11).

2. Plug according to claim 1, **characterised in that** it comprises a cylindrical body comprising said pressure means and a support, also cylindrical, open at an end into which said body is inserted freely by sliding, the bottom and the sides of the support forming, with the face of the body oriented towards the bottom, a chamber having a cylindrical shape, and **in that** the support is screwed onto the valve of the tyre up to a position in which the pressure means of the body exerts a pressure on the valve member in order to open it.

3. Plug according to claim 2, **characterised in that** the sealing between the body and the support is achieved by an O-ring.

4. Plug according to any one of claims 1 to 3, **characterised in that** said orifice is a pierced orifice formed in such a way as to allow primarily a calibrated laminar flow.

5. Plug according to any one of claims 1 to 4, **characterised in that** it comprises a removable seal intended to be removed before the installation of the plug on the tyre.

6. Equipment for testing a calibrated leak of gas out of a tyre (1) of the type comprising on the one hand a means for causing a leak of gas out of said tyre, and on the other hand a means for detecting said gas leak, **characterised in that** said means for causing a gas leak consists of a plug (5) having a calibrated leak according to any one of claims 1 to 5.

7. Equipment according to claim 6, **characterised in that** said means for detecting said gas leak comprises a device (4) for detecting and/or measuring the change in the pressure of the gas in the tyre escaping through the orifice.

8. Equipment according to claim 7, **characterised in that** said means for detecting said gas leak further comprises a sensor (3) called "TPMS" mounted in said tyre.

9. Equipment according to claim 8, **characterised in that** said "TPMS" sensor (3) communicates via radio with the detection and measurement device (4).

10. Equipment according to any one of claims 7 to 9, **characterised in that** the detection and measurement device (4) comprises means for storing and returning the test results, said means being adjustable according to the calibration of the plug having a calibrated leak used.

11. Equipment according to any one of claims 7 to 10, **characterised in that** it comprises a set of a plurality of plugs (5) having a calibrated leak, and **in that** the detection and measurement device (4) comprises selectable detection and measurement means adapted to each of said plugs.

12. Equipment according to any one of claims 7 to 11, **characterised in that** it also comprises means for periodic testing of the plug having a calibrated leak and for determining and taking into account the variations in the leak values over time.

13. Equipment according to any one of claims 7 to 12, **characterised in that** the plug is a consumable element intended to be thrown away after a certain number of uses.

14. Method for using the measurement equipment according to any one of claims 6 to 13 in order to calibrate a predetermined flow rate of gas escaping from a tyre, **characterised in that** it uses a plug (5) according to any one of claims 1 to 5.

15. Method according to claim 14, **characterised in that** it is used to test the operational nature of a TPMS sensor and/or of a detection and measurement device (4) using signals emitted by a TPMS sensor.

16. Method of use according to any one of claims 14 or 15, **characterised in that** it is intended to use a set of a plurality of plugs (5) having a calibrated leak, each plug (5) being designed to provide a predetermined leak rate at a certain pressure according to the tyre test to be carried out.
